# EUROPEAN PATENT APPLICATION

(11) **EP 1 749 703 A1**
(43) Date of publication of application: **07.02.2007**
(21) Application number: 05734364.2
(22) Date of filing: 14.04.2005
(51) Int. Cl.: B60R 21/00

(54) **CONTROL DEVICE FOR OCCUPANT RESTRAINT DEVICE**

(30) Priority: 21.04.2004 JP 2004125155
(71) Applicant: Bosch Corporation, Shibuya-ku Tokyo 150-8360 (JP)
(72) Inventor: HAYASHI, Taisuke c/o Bosch Automotive Systems Corp, Tomioka-shi, Gunma 370-2314 (JP); SAYNISCH, Ivor c/o Bosch Automotive Systems Corp., Tomioka-shi, Gunma 370-2314 (JP); MIYAGUCHI, Koichi, Bosch Automotive Systems Corp., Tomioka-shi, Gunma 370-2314 (JP); MATSUI, Eiichiro c/o Bosch Automotive Systems Corp, Tomioka-shi, Gunma 370-2314 (JP)
(74) Representative: Schwabe - Sandmair - Marx
(86) International application number: PCT/JP2005/007566
(87) International publication number: WO 2005/102791

(57) **Abstract**

Based on respective output signals (S4, S5, S7, S8) satellite sensors (4, 5) provided in an impact zone of a front section of a vehicle (1); an X-direction sensor (7) that detects an impact acceleration of the vehicle in a traveling direction thereof; a Y-direction sensor (8) that detects an impact acceleration in a direction that is orthogonal to the traveling direction, a control unit (6) that controls the operation of an air bag device (2) includes: a selection output portion that fetches, from among output signals (S40, S50) from the satellite sensors (4, 5) and an output signal (S80) from the Y-direction sensor (8), the output signal with the higher value; and a determination portion (9) that performs a collision determination of the vehicle (1) in response to the output signal (S7) from the X-direction sensor (7). A level of a threshold value used for the collision determination performed by the determination portion (9) is set based on the output signal selected by the selection output portion. In the case that the output signals (S4, S5) from the satellite sensors (4, 5) cannot be obtained, the level of the threshold value used for the collision determination is set based on the output signal (S80) from the Y-direction sensor (8), thereby allowing the operation of the collision determination to be maintained appropriately.

## Description

### Technical Field

The present invention relates to a control apparatus for an occupant restraint device like an air bag.

### Background Art

In order to control an occupant restraint device that protects an occupant of a vehicle from the shock that occurs when there is a collision, control apparatuses with various different structures have been proposed. These control apparatuses include sensors for collision detection in each section of the vehicle, and control the operation of the occupant restraint device based on processed signals from the sensors. JP-A-2001-310692 discloses an example of this type of control apparatus. In this type of known structure, a satellite sensor for collision detection is positioned in a crush zone in a front section of the vehicle. As a result, if the vehicle has a collision, shock caused by the collision that occurs in the front section of the vehicle can be detected as rapidly as possible, thereby allowing the occupant restraint device to be operated at an appropriate timing and the occupant to be reliable protected from the shock.

According to this structure in which the satellite sensor is positioned in the front section of the vehicle, normally, an output wire from the satellite sensor runs to a control unit generally positioned in a central section of the vehicle, and is electrically connected therewith. However, there is a problem that is liable to occur, namely, that if the output wire of the satellite sensor is broken during the collision of the vehicle, the output signal from the satellite sensor can not finally be received by the control unit.

To address this problem, the apparatus disclosed in JP-A-2001-310692 adopts the following structure. A cable routing structure of a wire harness provided between the satellite sensor and the control unit includes a wire harness main line and a wire harness branch line that split from each other at a branch point. A surplus length section that allows for extension is provided in the wire harness branch line between the branch point and the satellite sensor. Thus, even if the wire harness branch line moves relatively toward the rear of the vehicle with respect to the satellite sensor when the vehicle body deforms when a collision takes place, the surplus length section provided in the wire harness branch line extends and thus inhibits the wire harness branch line from breaking. However, there are various different types of collision, and thus it is extremely difficult to completely inhibit breakage of the wire harness using this type of wiring structure.

An object of the invention is to provide a control apparatus for an occupant restraint device that can be expected to operate with a high degree of reliability.

Another object of the invention is to provide a control apparatus for an occupant restraint device that allows control of an occupant restraint device to be performed without any malfunctions even if an output line of a sensor is broken.

### Disclosure of the Invention

The invention is characterized in that, a control apparatus for an occupant restraint device includes: satellite sensors provided in an impact zone of a front section of a vehicle; a first main sensor that detects an impact acceleration of the vehicle in a traveling direction thereof, the first main sensor being provided in the vehicle at a location that is different to the satellite sensors; a second main sensor that detects an impact acceleration in a direction that is orthogonal to the traveling direction; and a control unit that controls the operation of the occupant restraint device based on respective outputs from the satellite sensors, the first main sensor and the second main sensor, the control unit including a selection output portion that fetches, from among the outputs of the satellite sensors and the output of the second main sensor, the output with the higher value; and a determination portion that performs a collision determination of the vehicle in response to the output from the first main sensor, in which collision determination performed by the determination portion is performed to take into account the output that is selected by the selection output portion. In the case that the outputs from the satellite sensors are not input to the control unit as anticipated due to any type of cause resulting from a collision of the vehicle, the output from the second main sensor is used instead of the outputs from the satellite sensors. As a result, the occupant restraint device can be operated at an appropriate timing if a collision of the vehicle takes place.

### Brief Description of the Drawings

FIG. 1 is a schematic view of the structure of an embodiment of the invention.
FIG. 2 is a block diagram showing the structure of a control apparatus shown in FIG. 1.
FIG. 3 is a flow chart showing a collision determination program that is performed by a processing portion shown in FIG. 2.

### Best Mode for Carrying Out the Invention

In order to provide a more detailed explanation of the invention, a description will be given of the invention while referring to the appended drawings.

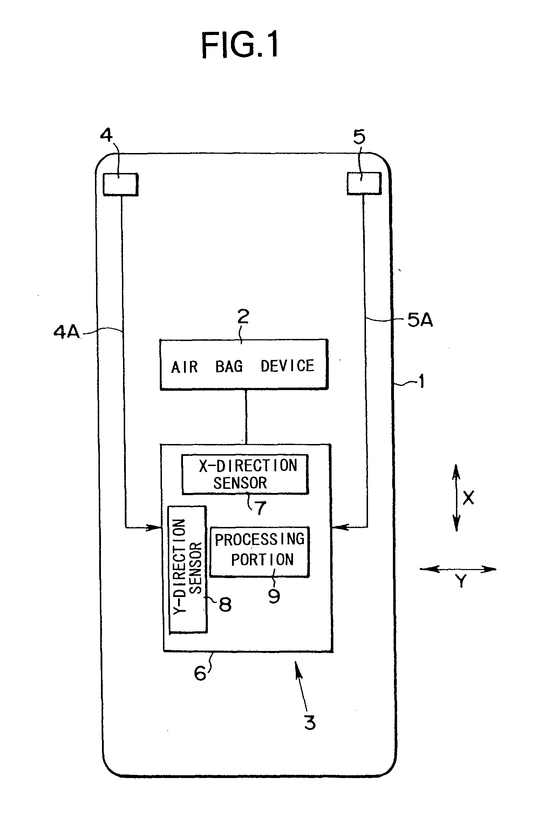

FIG. 1 is a schematic view of the structure of an embodiment of the invention. In FIG. 1 reference numeral, 1 is a vehicle, 2 is an air bag device mounted in the vehicle 1 in order to protect an occupant of the vehicle 1 from shock that occurs as a result of a collision of the vehicle 1. The reference numeral 3 indicates, as a whole, a control apparatus for controlling the operation of the air bag device 2 that is an occupant restraint device.

The control apparatus 3 includes satellite sensors 4, 5 provided in an impact zone in a front section of the vehicle 1, and a control unit 6. The control unit 6 is positioned in proximity to a central section of the vehicle 1. The term of impact zone as used here indicates a section of the body of the vehicle 1 that is anticipated to deform when the vehicle 1 has a collision accident. In the present embodiment, it is assumed that the impact zone includes a right side front end section and a left side front end section of the vehicle 1. Accordingly, in the example of the present embodiment, the satellite sensors 4, 5, which are impact detection sensors, are respectively positioned in these areas. However, with regard to the number satellite sensors that are attached, just one satellite sensor may be attached, or three or more satellite sensors may be attached.

The control unit 6 is provided with an X-direction sensor (a first main sensor) 7 and a Y-direction sensor (a second main sensor) 8. The X-direction sensor 7 detects an impact acceleration of the vehicle 1 that acts in traveling direction (the X-direction) of the vehicle 1, and the Y-direction sensor 8 detects an impact acceleration of the vehicle 1 that acts in the direction orthogonal (the Y-direction) to the traveling direction of the vehicle 1.

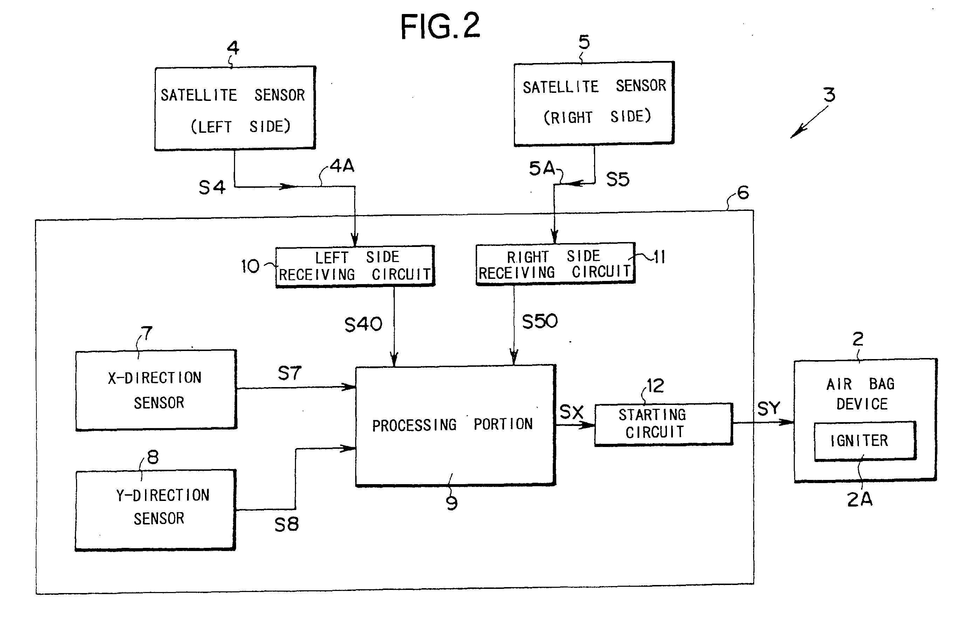

The satellite sensors 4, 5 are respectively connected to the control unit 6 by wire harnesses 4A, 5A, and the respective outputs of the satellite sensors 4, 5 are input to the control unit 6 via the wire harnesses 4A, 5A. The respective outputs of the satellite sensors 4, 5, and the X-direction sensor 7 and the Y-direction sensor 8 are input to a processing portion 9 provided in the control unit 6, and used to determine whether or not the vehicle 1 has had a collision, as will be described later. If the control unit 6 determines that the vehicle 1 has had a collision, an activation signal is output from the control unit 6 to the air bag device 2. As a result, an igniter 2A of the air bag device 2 (refer to FIG. 2) is activated to deploy the air bag device 2.

FIG. 2 is a block diagram showing the structure of the control apparatus 3 shown in FIG. 1 in more detail. In FIG. 2, all sections that correspond to the sections shown in FIG. 1 are denoted with the same reference numerals. An output signal S4 from the satellite sensor 4 is input to the processing portion 9 through the wire harness 4A and via a left side receiving circuit 10. An output signal S5 from the satellite sensor 5 is input to the processing portion 9 through the wire harness 5A and via a right side receiving circuit 11.

The left side receiving circuit 10 and the right side receiving circuit 11 convert the respective output signals from the satellite sensors 4, 5 to an appropriate output state using filter processing and the like, and also perform integration processing. The left side receiving circuit 10 and the right side receiving circuit 11 output respective output signals S40 and S50 that have a signal level that corresponds with the level of the impact that occurs in the respective impact zones. Furthermore, the output signals S40 and S50 from the left side receiving circuit 10 and the right side receiving circuit 11 are input to the processing portion 9. Note that, the structure may be modified such that the integration processing, which is performed to convert the output signals S4 and S5 into signals that indicate the impact level, is performed by the processing portion 9. An output signal S7 from the X-direction sensor 7 and an output signal 8 from the Y-direction sensor 8 are respectively input in the processing portion 9.

The processing portion 9 is configured by a data processing device that uses a micro-computer. The processing portion 9 processes the output signals S40, S50, and S7, S8 in accordance with a predetermined collision determination processing program, and thereby determines whether the vehicle 1 has had a collision. Moreover, if it is determined that the vehicle 1 has had a collision, a collision determination signal SX is output from the processing portion 9. When the collision determination signal SX is input to a starting circuit 12, an ignition signal SY for deploying the air bag device 2 is output. This ignition signal SY is sent to the igniter 2A of the air bag device 2.

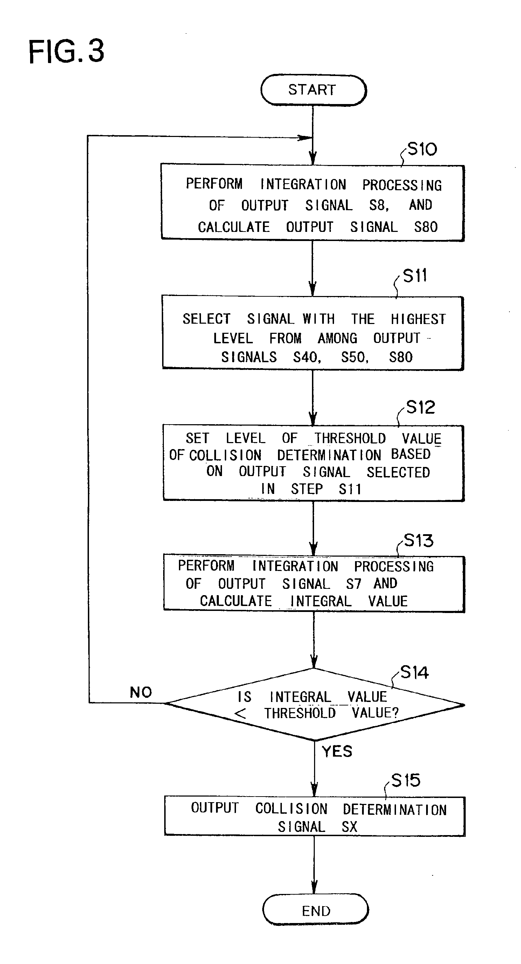

FIG. 3 is a flow chart showing the collision determination program that is performed by the processing portion 9. When a key switch, not shown, is turned on, electrical power is applied thereby starting performance of the collision determination program.

First, integration processing of the output signal S8 is performed in step S10, whereby the output signal S80 is obtained. The level of output signal S80 is a signal that indicates the level of the impact. Accordingly, the output signals S40, S50, S80 are all signals that indicate the level of the impact. In step S11, the signal amongst the output signals S40, S50 and S80 that indicates the highest impact level is selected. Each sensor detects a negative acceleration caused by the impact. The respective levels of the output signals S40, S50, S80 are levels that have a larger negative value as the magnitude of the impact increases. Accordingly, in step S11, the largest signal in terms of the absolute value level is selected. Next, in step S12, the output signal selected in step S11 is used as a basis for re-setting a threshold value, which is used for collision determination, from a pre-set threshold value to a new threshold value. More specifically, if the value of the pre-set threshold value is increased (made larger), the sensitivity of the collision determination is increased. In this manner, the selected output signal is used as a basis for changing the sensitivity of the collision determination. In addition, the program proceeds to step S13 where integration processing of the output signal S7 is performed to calculate an integral value. The program then proceeds to step S14.

In step S14, the threshold value re-set in step S12 is compared with the integral value calculated in step S13. If the integral value < the threshold value, the determination result of step S14 is YES, and the program proceeds to step S15, where the collision determination signal SX is output. More specifically, if the integral value < the threshold value, it is determined that the impact acceleration of the vehicle 1 in the X-direction has exceeded a predetermined value (there is a collision), and the collision determination signal SX is output. As a result, the igniter 2A is activated to deploy the air bag device 2.

On the other hand, if the integral value ≥ the threshold value, the determination result of step S14 is NO, and the program returns to step S11. More specifically, if the integral value ≥ the threshold value, it is determined that the impact acceleration of the vehicle 1 in the X-direction has not exceeded the predetermined value (there is no collision). In this case, the program returns to step S11 without deploying the air bag device 2. The program then performs steps S11 to S14 again.

Note that, the setting of the level of the threshold value that is performed in step S12 is configured such that re-setting of the threshold value is performed based on the output signal selected from among the output signals S40, S50, S80 in step S11. Accordingly, in the case that the vehicle 1 has had a collision, so long as the satellite sensors 4, 5 are operating normally and the wire harnesses 4A, 5A are not broken, the output signals S40, S50 that accurately indicate the collision state at the time of the collision are input to the processing portion 9. Thus, the output signals S40, S50 are compared with the output signal S80 based on the output signal S8 from the Y-direction sensor 8. If a front right side or front left side offset collision of the vehicle 1 takes place, the Y-direction sensor 8 will detect the Y-direction impact acceleration, and thus the collision level indicated by the output signal S80 will be high.

However, since the absolute value level of the output signal S80 is small as compared to the absolute value level of the output signals S40, S50, the output signal S40 or the output signal S50 is eventually selected in step S11. Then, in step S12, the level of the threshold value is re-set based on the selection result.

As a result, the collision determination processing that utilizes the collision detection result attained using the satellite sensors 4, 5 is performed with respect to the output signal S7, and the air bag device 2 can be activated at an appropriate timing based on the collision detection of the satellite sensors 4, 5.

Note that, if the satellite sensors 4, 5 are damaged or if the wire harnesses 4A, 5A are broken or the like due to a collision of the vehicle 1, the anticipated output signals S40, S50 will not be input to the processing portion 9 when the collision takes place. In this situation, the output signal S80 based on the output signal S8 from the Y-direction sensor 8 will be selected in step S11. If the vehicle 1 has an offset collision, the impact acceleration will act in the Y-direction of the vehicle 1. Thus, the Y-direction sensor 8 will also output an output signal that has a level that corresponds with the offset collision state. Accordingly, in step S12, the level of the threshold value will be re-set in accordance with the level of the output signal S80.

As a result, the collision determination processing will be performed with respect to the output signal S7 in a similar manner to when the collision determination result attained using the satellite sensors 4, 5 is used. Thus, even in the case when the output signals of the satellite sensors 4, 5 cannot be obtained, the air bag device 2 can be activated at an appropriate timing.

### Industrial Applicability

The invention is advantageous because it allows the performance of a control apparatus for an occupant restraint device to be substantially improved and the occupant restraint device to be activated at an appropriate timing, even when outputs from satellite sensors are not input to a control unit when a vehicle has a collision.

## Claims

1. A control apparatus for an occupant restraint device, comprising:
satellite sensors provided in an impact zone of a front section of a vehicle;
a first main sensor that detects an impact acceleration of the vehicle in a traveling direction thereof, the first main sensor being provided in the vehicle at a location that is different to the satellite sensors;
a second main sensor that detects an impact acceleration in a direction that is orthogonal to the traveling direction; and
a control unit that controls the operation of the occupant restraint device in response to respective outputs from the satellite sensors, the first main sensor and the second main sensor,
the control unit including a selection output portion that fetches, among the outputs of the satellite sensors and the output of the second main sensor, the output with the higher value, and a determination portion that performs a collision determination of the vehicle in response to the output from the first main sensor, wherein the collision determination performed by the determination portion is performed to take in to account the output that is selected by the selection output portion.

2. The control apparatus for an occupant restraint device according to claim 1, wherein the collision determination performed by the determination portion is performed by comparing the output from the first main sensor and a threshold value.

3. The control apparatus for an occupant restraint device according to claim 2, wherein the determination portion sets the threshold value for the collision determination in accordance with the output selected by the selection output portion.

4. The control apparatus for an occupant restraint device according to claim 3, wherein the setting of the threshold value is performed such that a pre-set threshold value is re-set in accordance with the output selected by the selection output portion.

5. The control apparatus for an occupant restraint device according to claim 4, wherein the re-setting of the threshold value is performed such that the sensitivity of the collision determination is increased.

6. The control apparatus for an occupant restraint device according to claim 1, 2, 3, 4 or 5, wherein the satellite sensors are provided in a front end section of the vehicle.
